(19) **Europäisches Patentamt / European Patent Office / Office européen des brevets**

(11) **EP 4 508 466 B1**

(12) **FASCICULE DE BREVET EUROPEEN**

(45) Date de publication et mention de la délivrance du brevet:
**20.05.2026 Bulletin 2026/21**

(21) Numéro de dépôt: **23725268.9**

(22) Date de dépôt: **04.04.2023**

(51) Classification Internationale des Brevets (IPC):
***G01S 19/11*** *(2010.01)*

(52) Classification Coopérative des Brevets (CPC):
**G01S 19/11; H01Q 13/203;** G01S 19/50;
H01Q 21/28

(86) Numéro de dépôt international:
**PCT/FR2023/050481**

(87) Numéro de publication internationale:
**WO 2023/198978 (19.10.2023 Gazette 2023/42)**

(54) **SYSTÈME DE POSITIONNEMENT À SEGMENTS DE CÂBLE RAYONNANT**

POSITIONIERUNGSSYSTEM MIT ABSTRAHLENDEN KABELSEGMENTEN

POSITIONING SYSTEM HAVING RADIATING CABLE SEGMENTS

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **11.04.2022 FR 2203319**

(43) Date de publication de la demande:
**19.02.2025 Bulletin 2025/08**

(73) Titulaire: **Syntony**
**31300 Toulouse (FR)**

(72) Inventeurs:
• **PATOUT, Benjamin**
**31300 TOULOUSE (FR)**

• **CARRIÉ, Guillaume**
**31300 TOULOUSE (FR)**
• **KORSAKISSOK, Joël**
**31300 TOULOUSE (FR)**

(74) Mandataire: **Santarelli**
**Tour Trinity**
**1 bis Place de la Défense**
**92400 Courbevoie (FR)**

(56) Documents cités:
CN-A- 113 534 196    CN-A- 113 640 835
FR-A1- 3 074 921

## Description

### Domaine Technique

La présente invention concerne de manière générale le domaine des systèmes de positionnement en intérieur (*indoor positioning*) ou des systèmes de positionnement en extérieur lorsque les conditions de réception des signaux GPS sont dégradées.

### Etat de la technique antérieure

L'absence de signaux GPS dans les environnements en intérieur (*indoor*) *a* conduit à développer des systèmes de positionnement spécifiques à ces derniers. Un grand nombre de techniques possibles ont été utilisées à cette fin. Par exemple, il est connu de déployer dans l'environnement en question des réseaux de balises permettant à un récepteur d'estimer sa position par TDOA (*Time Difference Of Arrival*) ou bien par triangulation à partir de temps d'arrivée, TOA (Time Of Arrival). Il est également possible d'utiliser des points d'accès existants, par exemple d'un réseau Wi-Fi pour déterminer la position d'un terminal à partir d'empreintes (*fingerprints*) de mesures de puissance (RSSI).

Un système de positionnement basé sur des câbles rayonnants (*leaky feeders*) a été proposé par la déposante dans la demande de brevet FR3074921.

Ce système de positionnement permet à tout utilisateur disposant d'un récepteur GPS de pouvoir se localiser dans un environnement intérieur tel qu'un métro sans avoir à souffrir d'une rupture de service lorsqu'il sort ou entre dans cet environnement.

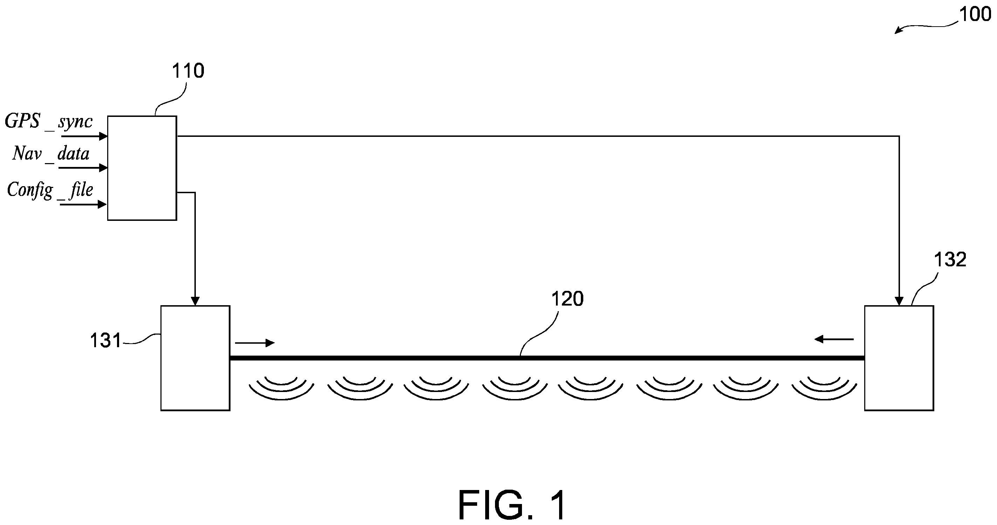

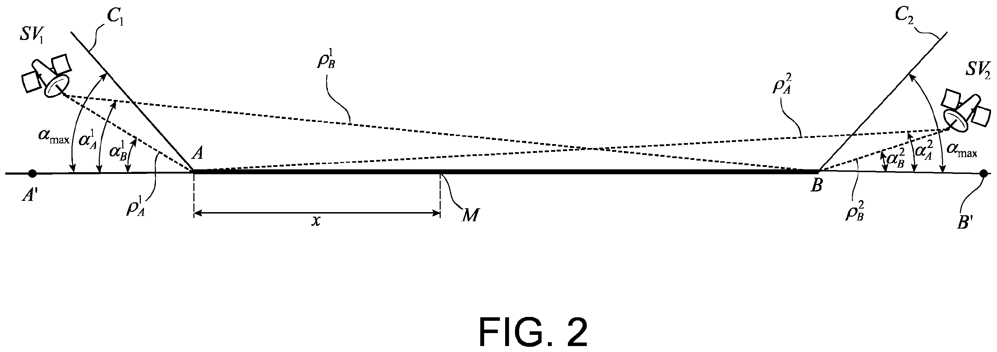

Un tel système positionnement à câbles rayonnants est illustré en Fig. 1 et son principe est rappelé en relation avec la Fig. 2.

Ledit système, 100, comprend des moyens de génération 110 de premiers signaux GNSS et de seconds signaux GNSS, un câble rayonnant 120, des moyens d'injection des premiers signaux GNSS à une première extrémité du câble, 131, et des moyens d'injection des seconds signaux GNSS à une seconde extrémité du câble, 132.

Les moyens de génération ont accès à un fichier de configuration, *Config_file,* des données de navigation, *Nav_data,* des données d'une horloge à très faible gigue de phase (jitter), *GPS_sync.* Le fichier de configuration *Config_file* comprend notamment : un masque de visibilité pour chacune des extrémités du câble, défini par une plage angulaire en élévation [$\alpha max_{min}$] et, le cas échéant en azimut [$\beta max_{min}$], les positions respectives des extrémités du câble et les caractéristiques matérielles de celui-ci (longueur, vitesse de propagation des ondes électromagnétiques au sein du câble etc.).

Les moyens de génération 110 fournissent des premiers signaux GNSS et des seconds signaux GNSS. Ces premiers et seconds signaux GNSS sont générés localement par simulation de propagation et non des signaux réels reçus de satellites.

Les premiers signaux GNSS sont générés de manière à ce que, à l'instant où ils sont injectés à la première extrémité du câble, ils soient identiques à ceux qui auraient été reçus en une première extrémité virtuelle dans des conditions de ciel ouvert, de la part d'un premier ensemble de satellites. Le premier ensemble de satellites est choisi parmi ceux de la ou des constellation(s) identifiée(s) dans le fichier de configuration appartenant à un premier cône de visibilité défini par un intervalle angulaire en élévation [$\alpha max_{min}$] et un intervalle angulaire en azimut [$\beta max_{min}$], les angles étant définis ici à partir d'un axe dirigé de la seconde extrémité vers la première extrémité du câble. Le premier ensemble de satellites comprend au moins un tel satellite.

De même, les seconds signaux GNSS générés sont tels que, à l'instant où ils sont injectés à la seconde extrémité du câble, ils soient identiques à ceux qui auraient été reçus à la position d'une seconde extrémité virtuelle, dans des conditions de ciel ouvert, de la part d'un second ensemble de satellites. Le second ensemble de satellites est choisi parmi ceux de la constellation identifiée dans le fichier de configuration appartenant à un second cône de visibilité défini par un intervalle angulaire en élévation [$\alpha_{min}, \alpha_{max}$] et un intervalle angulaire en azimut [$\beta_{min}, \beta_{max}$], les angles étant ici définis à partir d'un axe orienté de la première vers la seconde extrémité du câble. Le second ensemble de satellites comprend au moins un tel satellite.

L'union du premier et du second ensembles de satellites comprend au moins quatre satellites, les deux ensembles de satellites étant disjoints.

Le principe de fonctionnement est illustré en Fig. 2 dans le plan d'élévation.

Le câble rayonnant, supposé rectiligne, est représenté par le segment de droite [*AB*] où *A* et *B* sont les extrémités du câble. Les premier et second cônes de visibilité ont été représentés en $C_1$ et $C_2$, ainsi qu'un premier satellite $SV_1$ appartenant à $C_1$ et un second satellite $SV_2$ appartenant au second cône de visibilité. Les distances séparant le satellite $SV_1$ (resp. $SV_2$) des extrémités *A* et *B* du câble sont notées $\rho_A^1$ et $\rho_B^1$ (resp. $\rho_A^2$ et $\rho_B^2$). De même, les angles d'élévation sous lesquels est vu le satellite $SV_1$ (resp. $SV_2$) à partir des extrémités *A* et *B* du câble sont notés $\alpha_A^1$ et $\alpha_B^1$

(resp. $\alpha_A^2$ et $\alpha_B^2$ ). On a supposé ici que $\alpha_{min}$.

On définit une extrémité virtuelle A' située sur un prolongement virtuel du câble, du côté de l'extrémité A et à une distance $\Delta$ de cette dernière. De même, on définit une extrémité B' située sur un prolongement virtuel du câble, du côté de l'extrémité B et à une distance $\Delta$ de cette dernière. La distance $\Delta$ est choisie telle que $\Delta = \frac{L-\ell}{2}$, $L = \ell \frac{c}{v}$ étant la longueur apparente du câble, $\ell$ étant sa longueur réelle, c étant la vitesse de la lumière dans le vide et v étant la vitesse de propagation d'une onde électromagnétique dans le câble.

Le système de positionnement injecte à l'extrémité A du câble rayonnant les signaux qui auraient été reçus en A' des satellites appartenant au premier cône de visibilité $C_1$. De même, il injecte à l'extrémité B du câble rayonnant les signaux qui auraient été reçus en B' des satellites appartenant au second cône de visibilité $C_2$.

On peut alors montrer qu'un usager équipé d'un récepteur GNSS situé en un point M, estimera les pseudo-distances le séparant respectivement des satellites, $SV_1, SV_2$, par:

[Math. 1]

$$\hat{\rho}_M^1 = \rho_A^1 - \frac{L-\ell}{2} + X + \delta = \rho_{A'}^1 + X + \delta$$

[Math. 2]

$$\hat{\rho}_M^2 == \rho_B^2 + \frac{L+\ell}{2} - X + \delta = \rho_{A'}^2 - X + \delta$$

où $= x \frac{c}{v}$ , x étant l'abscisse de M sur l'axe AB en prenant A comme origine et $\delta$ est la distance équivalente à l'offset d'horloge du récepteur GNSS.

A partir des pseudo-distances estimées ainsi pour 4 satellites (appartenant à l'union des deux sous-ensembles de satellites précités), le récepteur GNSS peut déterminer sa position.

Le système de positionnement par câble rayonnant décrit plus haut donne des résultats satisfaisants mais ses performances sont limitées par la longueur du câble. En effet, la plupart des récepteurs GNSS courants possèdent une dynamique d'entrée de l'ordre de 24dB, autrement dit le signal satellitaire reçu le moins puissant ne peut être plus de 24dB plus faible que le signal satellitaire le plus puissant. Or, l'atténuation linéique des signaux GPS dans un câble rayonnant est de l'ordre de 3 à 20 dB/ 100m. Il en résulte qu'un système de positionnement par câble rayonnant ne peut généralement pas fonctionner lorsque la longueur du câble excède quelques centaines de mètres.

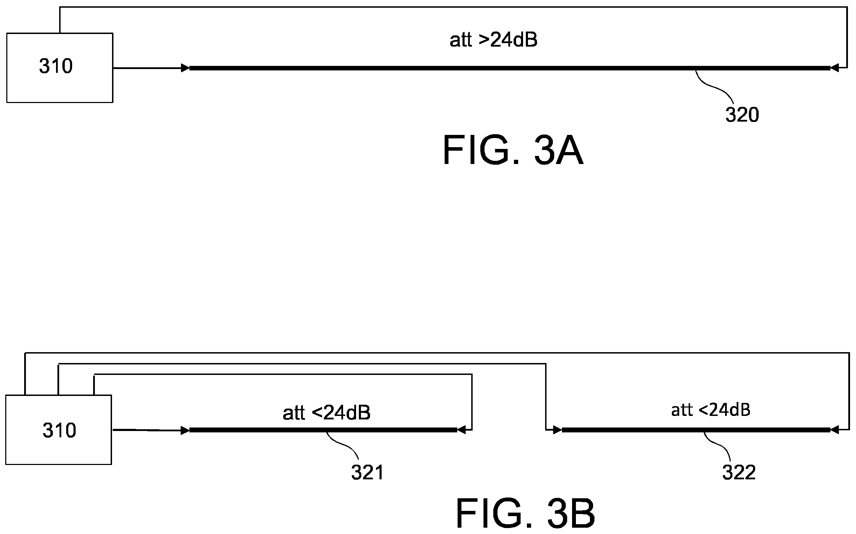

Cette contrainte est illustrée en Fig. 3A : lorsque le câble rayonnant 320 possède une longueur supérieure à une longueur critique, les signaux satellitaires simulés et injectés à la première extrémité A sont atténués de plus de 24dB, lorsqu'ils parviennent à l'extrémité . De même les signaux satellitaires simulés et injectés à la seconde extrémité B sont atténués de plus de 24dB, lorsqu'ils parviennent à l'extrémité A. Dans un tel cas, il n'est pas possible pour un récepteur GNSS d'estimer sa position correctement aux extrémités du câble car il ne peut acquérir les signaux satellitaires issus de l'extrémité la plus éloignée du récepteur.

Une solution connue pour remédier à cette situation est alors de scinder le câble rayonnant en différents segments de longueur inférieure à la longueur critique et d'injecter des signaux satellitaires simulés aux extrémités respectives de ces segments, comme illustré en Fig. 3B. Chaque segment 321, 322, doit alors être considéré comme un câble rayonnant indépendant, nécessitant des moyens de génération propres, ce qui est onéreux, ou bien un générateur unique 310 à plusieurs sorties RF (ici 4) comme représenté, ce qui n'autorise pas de scalabilité. En outre dans les deux cas, le nombre de câbles coaxiaux (ou de fibres optiques associés à des convertisseurs optoélectroniques) entraînent des coûts additionnels importants.

Un objet de la présente invention est par conséquent de proposer un système de positionnement à plusieurs segments de câble rayonnant ne présentant pas les inconvénients précités, en particulier de proposer un système qui soit scalable et ne nécessite pas d'utiliser des liaisons RF ou optiques additionnelles.

Les demandes de brevet CN113534196A et CN113534196A décrivent elles aussi des systèmes de positionnement basés sur des câbles rayonnant et des signaux GNSS virtuels.

## Présentation de l'invention

La présente invention est définie par un système de positionnement le long d'un câble rayonnant, composé d'au moins un premier segment et un second segment, ledit système comprenant :

- des moyens de génération d'un premier signal GNSS composite formé d'une pluralité de signaux GNSS définis comme ceux qui seraient reçus en configuration de ciel ouvert par des points situés aux extrémités des différents segments du câble, à chaque segment étant associé un premier signal GNSS qui serait reçu d'un premier point à une extrémité proximale de ce segment en provenance de satellites appartenant à un premier cône de visibilité, et un second signal GNSS qui serait reçu d'un second point à une extrémité distale de ce segment en provenance de satellites appartenant à un second cône de visibilité, lesdits signaux GNSS étant multiplexés en fréquence pour former ledit signal GNSS composite, ledit signal GNSS composite étant injecté à l'extrémité proximale du premier segment, le premier signal GNSS associé au premier segment étant à la fréquence de réception d'un récepteur GNSS, $f_{GNSS}$ ;

- un boitier d'interconnexion RF connecté entre les premier et second segments, destiné à démultiplexer le premier signal GNSS composite en décalant en fréquence les différents signaux GNSS du premier signal composite et à fournir, d'une part, sur une première sortie le second signal GNSS associé au premier segment à la fréquence $f_{GNSS}$, et à fournir d'autre part, sur une seconde sortie, un second signal GNSS composite dans lequel les premier et second signaux GNSS associés au premier segment sont éliminés, le second signal GNSS du premier segment étant injecté à la fréquence $f_{GNSS}$ à l'extrémité distale du premier segment et ledit second signal GNSS composite étant injecté à l'extrémité proximale du second segment;

- un boitier de terminaison RF connecté à l'extrémité distale du second segment et destiné à décaler à la fréquence $f_{GNSS}$ le second signal GNSS associé au second segment, et à l'injecter à l'extrémité distale du second segment.

Avantageusement, les signaux GNSS du premier signal GNSS composite sont situés à des fréquences $F_{GNSS} + i\delta f$ où $i$ est un entier relatif.

Le boitier d'interconnexion RF peut comprendre un premier démultiplexeur (incluant un diviseur RF pour diviser le premier signal composite entre une première voie et une seconde voie, la première voie comprenant : un premier mélangeur pour mélanger le signal composite ainsi divisé avec une première fréquence de translation ($f_1$) de manière à ce que le second signal GNSS du premier segment soit translaté à une fréquence intermédiaire ($IF_0$) ; un premier filtre passe-bande possédant une première bande passante ($BP_1$) autour de ladite fréquence intermédiaire pour sélectionner le second signal GNSS du premier segment ainsi translaté ; et un second mélangeur pour mélanger le second signal GNSS du premier segment ainsi sélectionné avec une première fréquence de référence ($f_1^{ref}$) de manière à transposer ce dernier à la fréquence $f_{GNSS}$.

La seconde voie peut comprendre un troisième mélangeur pour mélanger le signal composite divisé avec une seconde fréquence de translation ($f_2$) de manière à ce que un second signal GNSS composite soit translaté à la fréquence intermédiaire ($IF_0$); un second filtre passe-bande possédant une seconde bande passante ($BP_2$) autour de ladite fréquence intermédiaire pour sélectionner le second signal GNSS composite; et un quatrième mélangeur pour mélanger le second signal GNSS composite avec une seconde fréquence de référence ($f_2^{ref}$) de manière à transposer ce dernier à la fréquence $f_{GNSS}$.

La première voie peut en outre comprendre un troisième filtre passe-bande destiné à filtrer le second signal GNSS du premier segment et que la seconde voie comprend également un quatrième filtre passe-bande destiné à filtrer le second signal GNSS composite.

Le boitier d'interconnexion RF peut en outre comprendre un duplexeur dont le port commun est connecté à l'extrémité distale du premier segment, le port de sortie est relié à l'entrée du diviseur RF et le port d'entrée est connecté à la sortie du second mélangeur de la première voie.

Le boitier d'interconnexion RF peut comprendre en outre, entre le port de sortie du duplexeur et l'entrée du diviseur RF, un filtre passe-bande commun ayant la largeur de bande du premier signal composite en série avec un amplificateur, le gain de l'amplificateur étant choisi pour compenser l'atténuation du signal GNSS composite dans le premier segment.

Selon une variante de réalisation, le câble rayonnant est composé d'une pluralité Nde segments, le boitier de terminaison RF comprenant alors : un premier mélangeur à une Nième fréquence de translation ($f_N$) de manière à ce que le second signal GNSS du Nième segment soit translaté à une fréquence intermédiaire ($IF_0$), un premier filtre passe-bande possédant une première bande passante ($BP_1$) autour de ladite fréquence intermédiaire pour sélectionner le second signal GNSS du Nième segment ainsi translaté, et un second mélangeur pour mélanger le second signal GNSS du Nième segment ainsi sélectionné avec une Nième fréquence de référence ($f_N^{ref}$) de manière à transposer ce dernier à la fréquence $f_{GNSS}$.

Le boitier de terminaison RF peut alors comprendre en outre un duplexeur dont le port commun est connecté à l'extrémité distale du Nième segment, le port de sortie est relié à l'entrée du premier mélangeur et le port d'entrée est relié à la sortie du second mélangeur.

Le boitier de terminaison RF peut comprendre en outre, entre le port de sortie du duplexeur et l'entrée du diviseur RF, un second filtre passe bande, ayant la largeur de bande du dernier signal composite associé au Nième segment, dit dernier segment, suivi par un amplificateur, le gain de l'amplificateur étant choisi pour compenser l'atténuation du dernier signal GNSS composite dans le dernier segment.

Les moyens de génération du signal GNSS composite peuvent également générer dans ce signal au moins deux signaux de synchronisation présentant un écart de fréquence de $\delta f$, chaque signal de synchronisation étant obtenu en modulant une onde continue avec une séquence d'étalement spectral pseudo-aléatoire, ladite séquence aléatoire étant choisie identique pour l'ensemble des signaux de synchronisation.

Les fréquences centrales des signaux de synchronisation sont avantageusement situées dans des zones de fiable densité spectrale du premier signal GNSS composite.

Le boitier d'interconnexion RF ainsi que le boitier de terminaison RF peuvent chacun comprendre un circuit de génération de signal d'horloge comprenant un mélangeur pour multiplier le signal composite avec lui-même, un filtre passe-bas ou passe-bande de manière à isoler du mélange une composante à la fréquence $\delta f$.

## Brève description des figures

D'autres caractéristiques et avantages de l'invention apparaîtront à la lecture d'un mode de réalisation préférentiel de l'invention, fait en référence aux figures jointes parmi lesquelles :

[Fig. 1] représente, de manière schématique, un système de positionnement le long d'un câble rayonnant connu de l'état de la technique ;

[Fig. 2] représente de manière schématique le principe de fonctionnement du système de positionnement illustré en Fig. 1 ;

[Fig. 3A] illustre une contrainte portant sur un système de positionnement à câble rayonnant connu de l'état de la technique ;

[Fig. 3B] représente une solution permettant de relâcher cette contrainte ;

[Fig. 4] représente de manière schématique un système de positionnement utilisant 2 segments de câble rayonnant selon un premier exemple de réalisation de l'invention ;

[Fig. 5A]

[Fig. 5B]

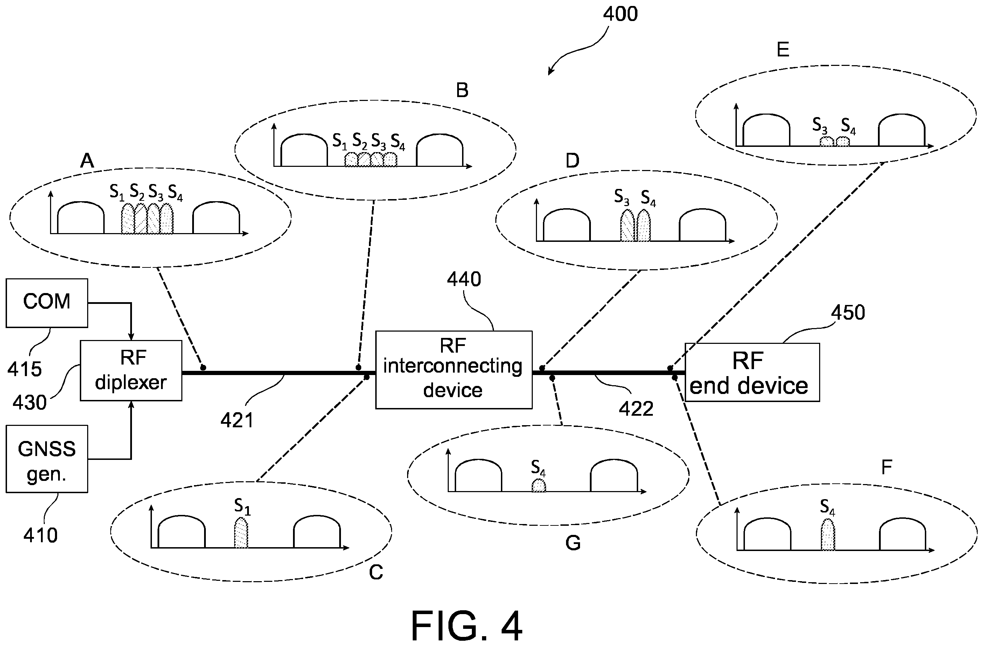

[Fig. 5C]
représentent de manière schématique un dispositif d'interconnexion RF et un dispositif de terminaison RF de la Fig. 4, ainsi que les signaux présents en différents points de ces dispositifs ;

[Fig. 6A]

[Fig. 6B]

[Fig. 6C]
représentent de manière schématique un système de positionnement utilisant 4 segments de câble rayonnant selon différents exemples de réalisation de l'invention ;

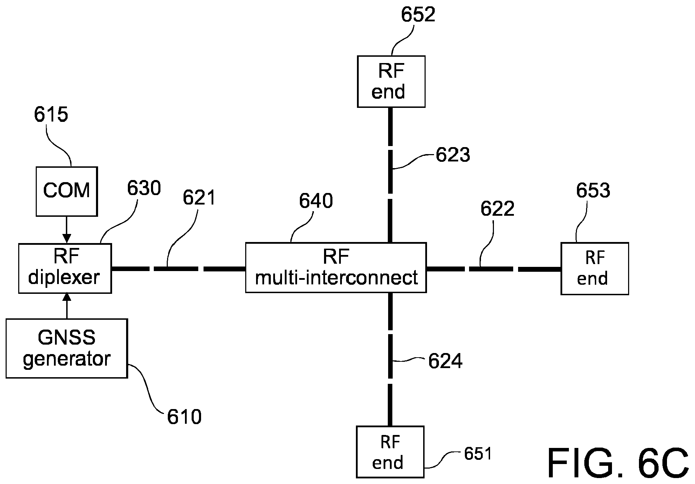

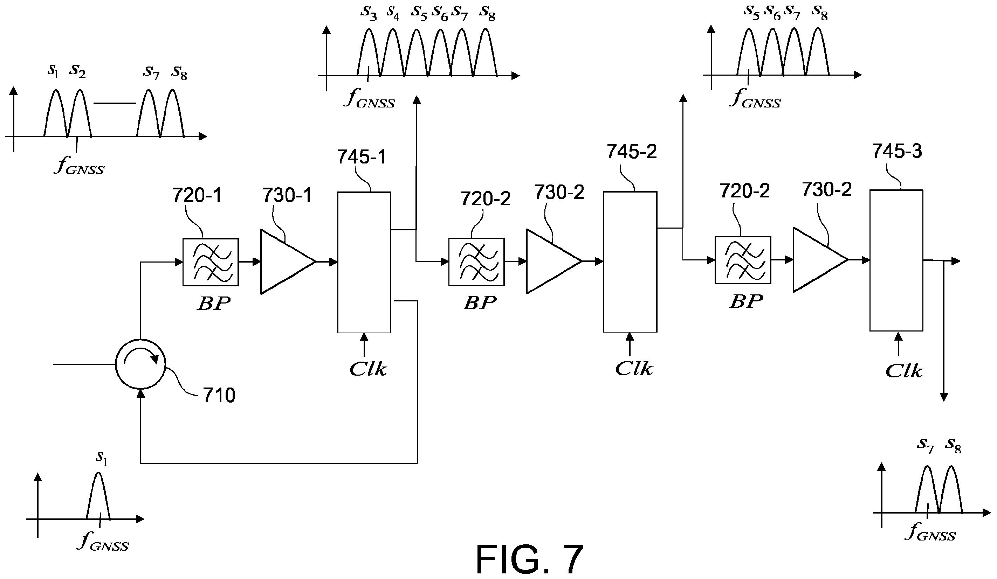

[Fig. 7] représente de manière schématique un dispositif d'interconnexion RF de la Fig. 6C ;

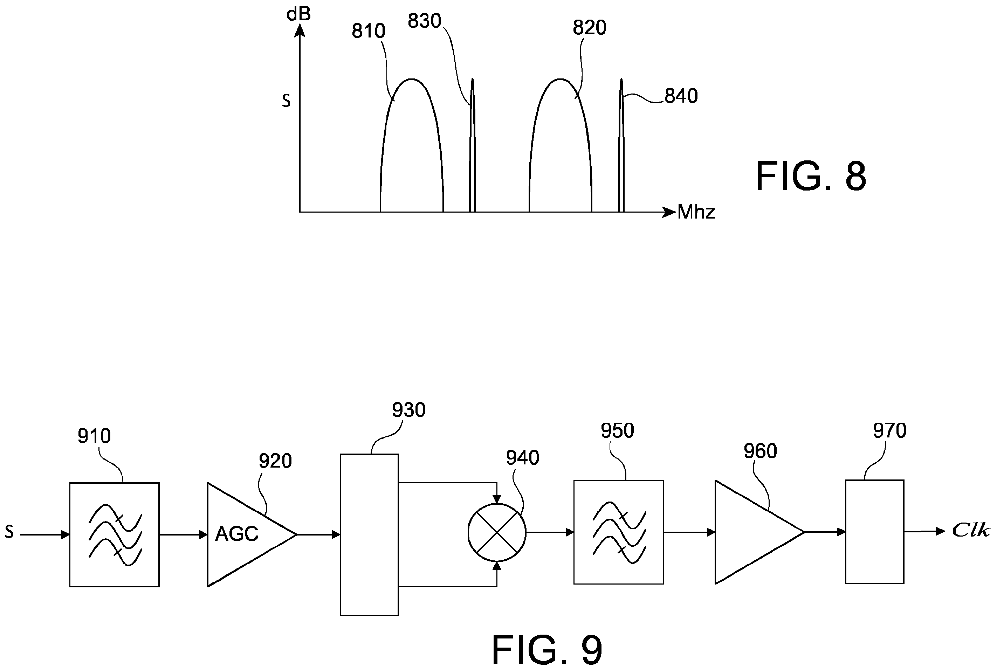

[Fig. 8] représente de manière schématique le spectre d'un signal composite injecté dans un câble rayonnant comprenant des signaux GNSS et des signaux de synchronisation ;

[Fig. 9] représente de manière schématique un circuit de génération d'un signal de transposition de fréquence à partir du signal composite de la Fig. 8.

## Description des modes de réalisation

Nous considérerons dans la suite un système de positionnement par câble rayonnant tel que présenté dans la partie introductive.

Par câble rayonnant (*leaky feeder*), on entend notamment un câble coaxial dont le conducteur extérieur présente des fentes ou des ouvertures à intervalles réguliers de manière à permettre une émission radiale sur toute sa longueur. De manière équivalente, on pourra utiliser tout guide d'ondes, à fentes ou à ouvertures, présentant une grande extension selon son axe longitudinal et permettant une émission radiale tout le long de cet axe.

Le câble rayonnant peut être linéaire ou présenter des sections courbes.

Nous supposerons que le câble rayonnant est scindé en plusieurs segments distincts de longueurs égales ou distinctes, la longueur de chaque segment étant choisie inférieure à une longueur critique. Par longueur critique, on entend une longueur telle que l'affaiblissement d'un signal GNSS dans un segment de cette longueur corresponde à l'écart de puissance maximum admissible (en dB) entre signaux GNSS autorisant leur acquisition simultanée par un récepteur GNSS.

De manière générale, par signaux GNSS (*Global Navigation Satellite System*), nous entendons ici tout type de signaux satellitaires permettant un positionnement, quel que soit le système considéré (GPS, Galileo, GLONASS, Beidou, etc.)

La Fig. 4 représente de manière schématique un système de positionnement utilisant 2 segments de câble rayonnant selon un premier exemple de réalisation de l'invention.

Le premier segment de câble rayonnant, 421, est relié à la sortie commune d'un diplexeur, 430, recevant d'une part, dans une première bande, des signaux GNSS générés par simulation en provenance du générateur 410, et d'autre part, dans des secondes bandes, des signaux de communication mobile à destination des différents utilisateurs, en provenance du module de communication 415. Ainsi, de manière avantageuse, une seule sortie de signal est nécessaire pour les 2 segments 421 et 422. Le diplexeur 430 peut être réalisé à partir d'un diviseur RF alimenté par les sorties et fournissant ainsi à son entrée une combinaison des signaux GNSS et des signaux de communication mobile.

Les signaux GNSS sont ici représentés à 4 fréquences distinctes séparées entre elles d'un pas $\delta f$ de 10 MHz : 1565,42 MHz, 1575,42 MHz, 1585,42 MHz et 1595,42 MHz. Il est clair pour l'homme du métier que d'autres fréquences pourront être utilisées, par exemple 1575,42 MHz, 1585,42 MHz, 1595,42 MHz et 1605,42 MHz.

Seule la fréquence $f_{GNSS}$ (ici $f_{GNSS}$ =1575,42 MHz, fréquence L1 d'un système GPS) peut être exploitée par les récepteurs des utilisateurs, les autres fréquences n'étant pas prises en compte dans l'algorithme de poursuite par un tel récepteur. Ces autres fréquences ont simplement pour objet de transporter les signaux GNSS dans le câble rayonnant. De manière générale, ces fréquences pourront prendre des valeurs $f_{GNSS} + i\delta f$ où $i$ est un entier relatif. Dans certains cas, il pourra être dérogé à cette contrainte, les fréquences utilisées pour le transport présentant alors un décalage quelconque par rapport à la fréquence $f_{GNSS}$.

Dans l'exemple illustré (diagramme A), seul le signal $s_2$ à la fréquence $f_{GNSS}$, émis sur le trajet de propagation aller dans le segment de câble 421 peut être exploité par un récepteur pour déterminer sa position. Il convient de remarquer (diagramme B) l'effet de l'atténuation après propagation dans le câble. Le boitier RF d'interconnexion, 440, renvoie, comme expliqué plus loin, le signal $s_1$ transposé à la fréquence $f_{GNSS}$ dans le premier segment, 421 (diagramme C). Ainsi, pour un utilisateur, tout se passe comme si le signal $s_2$ était injecté à la première extrémité, dite extrémité proximale du segment 421, et le signal $s_1$ était injecté à sa seconde extrémité, dite extrémité distale. Le boitier RF d'interconnexion injecte en outre dans le second segment 422 les signaux GNSS restants, à savoir ceux qui n'ont pas été transmis à la fréquence $f_{GNSS}$, dans le premier segment, 421, soit $s_3$, $s_4$., sont injectés à l'extrémité proximale du second segment.

Le signal $s_3$ est transmis à la fréquence $f_{GNSS}$ sur le trajet de propagation aller dans le second segment, 422. On remarque l'atténuation des signaux $s_3$, $s_4$ après s'être propagés dans le second segment. Le boitier RF de terminaison, 450, renvoie, le signal $s_4$ transposé à la fréquence $f_{GNSS}$ dans le segment, 421 (diagramme F). Ainsi, pour le récepteur d'un utilisateur, tout se passe comme si le signal $s_3$ était injecté à l'extrémité proximale du second segment 422 et le signal $s_4$ était injecté à son extrémité distale.

Selon une variante non représentée sur cette figure, le signal $s_4$ peut être transmis à la fréquence $f_{GNSS}$ sur le trajet de propagation aller dans le second segment, 422, et, dans ce cas, le boitier de terminaison RF, 450, renvoie, le signal $s_3$ transposé à la fréquence $f_{GNSS}$ dans le segment, 421.

Par ailleurs, le boitier RF d'interconnexion 440 ainsi que le boitier RF de terminaison, 450, peuvent être directement alimentés en énergie via les segments de câble rayonnant 421, 422.

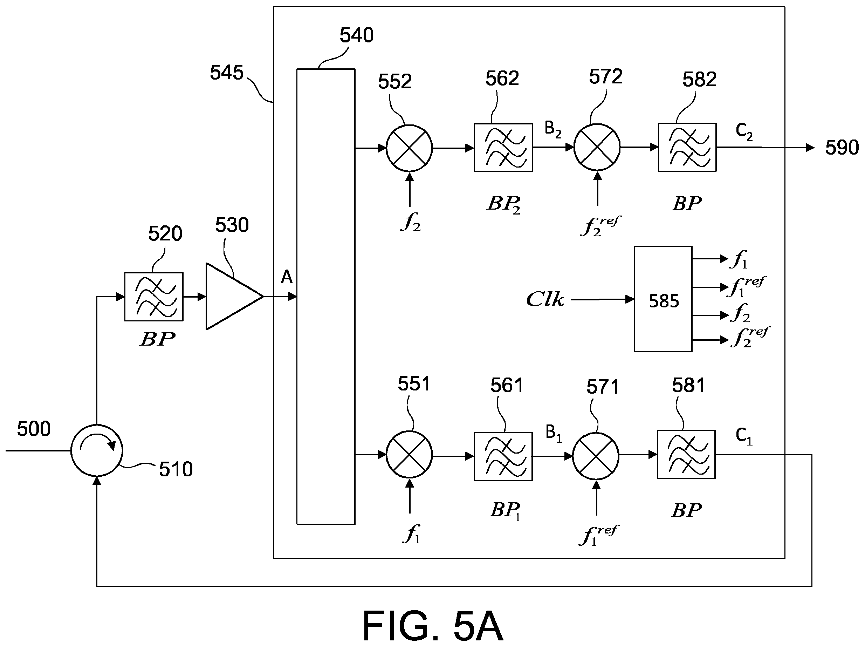

Le détail du boitier d'interconnexion RF de la Fig. 4 a été représenté schématiquement en Fig. 5A.

Le boitier comprend un premier port RF, 500, destiné à être connecté au premier segment de câble rayonnant, 421, et un second port RF, 590 destiné à être connecté au second segment de câble rayonnant, 422. De manière plus générale, les ports RF 500 et 590 pourront être connectés respectivement à l'extrémité distale et l'extrémité proximale de deux segments consécutifs, le caractère proximal ou distale étant déterminé par référence au générateur de signaux GNSS.

Le nombre N de signaux GNSS générés est égal au double du nombre de segments ( $N = 4$ ).

Le port RF 500, dit port commun, est relié à un duplexeur 510, le signal GNSS composite, formé par les signaux $s_1, .., s_4$ reçus sur ce port, étant filtré par un filtre passe-bande, 520, dont la bande passante, $BP$, correspond à la bande des signaux GNSS, puis amplifié par un amplificateur, 530.

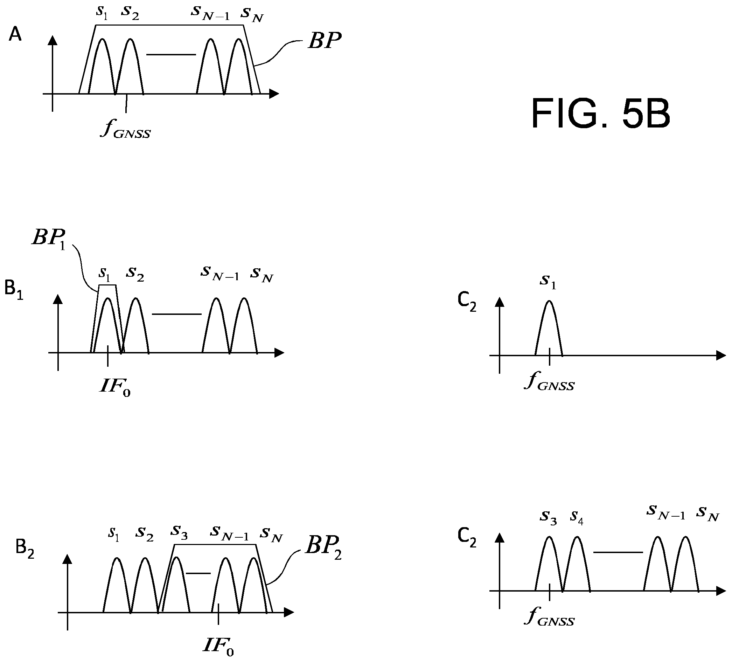

Le gain de l'amplificateur 530 est avantageusement choisi de manière à compenser l'atténuation dans le premier segment de câble rayonnant, 421. Le spectre du signal GNSS composite en sortie de l'amplificateur 530 est illustré dans le diagramme A de la Fig. 5B : on note que le spectre du signal $s_2$ est ici centré sur la fréquence $f_{GNSS}$, autrement dit que le signal $s_2$ était à la fréquence $f_{GNSS}$ lors de sa propagation dans le premier segment.

Le signal GNSS composite ainsi amplifié est ensuite fourni à un diviseur RF, 540.

Sur une première branche en sortie du diviseur RF, le signal est mélangé, au moyen d'un mélangeur 551, à une première fréquence de translation $f_1$ pour amener le signal $s_1$ une fréquence intermédiaire, $IF_0$ (ici $f_1 = f_{GNSS} - IF_0 - \delta f$). La fréquence intermédiaire pourra être choisie égale à un multiple de $\delta f$. Selon un exemple de réalisation $\delta f = 10MHz$ et $IF_0 = 70MHz$.

Le signal en fréquence intermédiaire ainsi obtenu est filtré au moyen d'un filtre passe-bande, 561, à bande passante étroite, $BP_1$, centré sur la fréquence $IF_0$, pour sélectionner le signal $s_1$, comme représenté dans le diagramme $B_1$ de la Fig. 5B. Le signal en sortie du filtre 561 est ensuite mélangé avec une première fréquence de référence, $f_1^{ref}$, pour amener le signal $s_1$ à la fréquence $f_{GNSS}$. Le signal ainsi mélangé est filtré au moyen du filtre passe-bande, 581, de largeur de bande, $BP$, avant d'être renvoyé vers le duplexeur pour être injecté à l'extrémité distale du premier segment de câble. Comme on peut le constater dans le diagramme $C_1$ de la Fig. 5B, le signal en sortie du filtre 581 ne comporte plus que le signal $s_1$, centré sur la fréquence $f_{GNSS}$. Ce signal se propage dans le premier segment de câble dans le sens retour.

Sur une seconde branche en sortie du diviseur RF, le signal est mélangé, au moyen d'un mélangeur 552, à une seconde fréquence de translation $f_2$ pour centrer le spectre de l'ensemble des signaux $s_3, ..., s_N$ à la fréquence intermédiaire $IF_0$. Le signal en fréquence intermédiaire ainsi obtenu est filtré au moyen d'un filtre passe-bande 562, dont la largeur de bande, $BP_2$, permet de sélectionner l'ensemble des signaux restants $s_3, ..., s_N$, comme représenté dans le diagramme $B_2$ de la Fig. 5B.

Le signal en sortie du filtre 562 est ensuite mélangé à une seconde fréquence de référence $f_2^{ref}$ dans le mélangeur 572, puis filtré au moyen du filtre passe-bande, 582, de bande passante, $BP$, avant d'être injecté dans le second segment de câble. Comme, on peut le constater dans le diagramme $C_2$ de la Fig. 5B, le second signal composite en sortie du filtre 582 ne comporte plus que les signaux GNSS $s_3, s_4, ..., s_N$, le signal $s_3$ étant alors centré sur la fréquence $f_{GNSS}$. Le second signal composite se propage dans le second segment de câble, dans le sens aller.

Selon une variante non représentée, évoquée ci-dessus en relation avec la Fig. 4, la seconde fréquence de référence du mélangeur 572 peut être choisie de manière à ce que le signal $s_4$ soit centré sur la fréquence $f_{GNSS}$. Le second signal composite en sortie du filtre 582 comporte les mêmes signaux GNSS que ci-dessus mais décalés de $-\delta f$. On notera que, dans cette variante, la forme du second signal composite est similaire à celle du premier signal composite et par conséquent, le chainage des segments de câble peut être itéré en gardant le même principe de filtrage passe-bande à la fréquence intermédiaire puis de transposition à la fréquence $f_{GNSS}$.

D'autres variantes du boitier d'interconnexion RF pourront être encore envisagées par l'homme du métier sans sortir pour autant du cadre de la présente invention. Par exemple le filtre passe-bande 520 et l'amplificateur 530 pourront être placés sur chacune des voies. En outre, des amplificateurs pourront être prévus sur chacun des voies de manière à compenser l'atténuation dans le diviseur RF et les filtres passe-bande 561,581, resp. 562, 582.

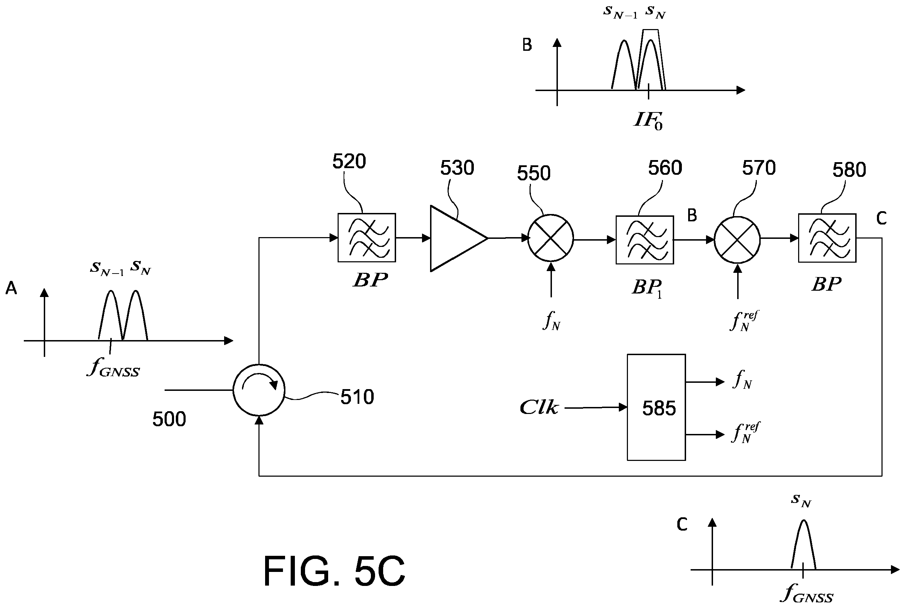

Le détail du boitier de terminaison RF de la Fig. 4 a été représenté schématiquement en Fig. 5C.

Le boitier de terminaison RF est connecté à l'extrémité distale du dernier segment de câble rayonnant à compter du générateur de signaux GNSS. Lorsque la structure du système de positionnement est arborescente comme illustré plus loin, un boitier de terminaison RF est prévu en chaque feuille de l'arbre.

Le boitier de terminaison RF comprend un port RF, 500, destiné à être connecté au segment de câble en question. Le port RF 500 est relié à un duplexeur 510, le signal GNSS composite, formé ici par les signaux $s_{N-1}, s_N$ (par exemple $s_3, s_4$ dans l'exemple de la Fig. 4) reçus sur ce port, est filtré par le filtre passe-bande 520, de bande passante $BP$, puis fourni à l'amplificateur 530. Le gain de l'amplificateur est là encore avantageusement choisi de manière à compenser l'atténuation dans le segment de câble rayonnant, 422. Le spectre du signal composite est illustré dans le diagramme A, le spectre du signal $s_{N-1}$ étant centré sur la fréquence $f_{GNSS}$. On comprend ainsi que le signal $s_{N-1}$ était à la fréquence $f_{GNSS}$ lors de sa propagation aller dans le segment 422.

Sans perte de généralité, nous supposerons ici que $N = 4$ et donnerons le cas général entre parenthèses). Le second signal composite amplifié est ensuite mélangé dans le mélangeur 550 avec une troisième fréquence de translation $f_3$ (de manière plus générale avec une Nème fréquence de translation $f_N$) pour amener le signal $s_4$ (de manière plus générale le signal $s_N$) à la fréquence intermédiaire $IF_0$. Le signal en sortie du mélangeur 550 est ensuite filtré par le filtre passe-bande 560, de bande passante $BP_1$ centrée sur $IF_0$ pour sélectionner le dernier signal GNSS restant en l'occurrence ici le signal $s_4$. Le signal filtré par le filtre 560 est ensuite mélangé, dans le mélangeur 570, à une troisième fréquence de référence, $f_3^{ref}$, (de manière plus générale $f_N^{ref}$) pour transposer le signal $s_4$ à la fréquence $f_{GNSS}$

Le signal $s_4$ ($s_N$) ainsi transposé en fréquence est filtré au moyen du filtre passe-bande, 580, de bande passante, *BP.* Ce signal est fourni au duplexeur 510 qui l'injecte à l'extrémité distale du second segment, de manière à ce qu'il s'y propage dans le sens retour.

Alternativement, selon la seconde variante précitée si le signal $s_4$ ($s_N$) était à la fréquence $f_{GNSS}$ lors de sa propagation aller dans le segment 422, la troisième fréquence de translation serait choisie de manière à amener le signal $s_3$ (de manière plus générale le signal $s_{N-1}$) à la fréquence intermédiaire $IF_0$. Le filtre passe-bande 560 sélectionnerait alors le signal $s_3$ ($s_{N-1}$) avec la bande passante $BP_1$) et le mélangeur 570 utiliserait la même troisième fréquence de référence $f_3^{ref}$, pour transposer le signal $s_3$ à la fréquence $f_{GNSS}$

Enfin, d'autres variantes du boitier de terminaison RF pourront être envisagées par l'homme du métier sans sortir pour autant du cadre de la présente invention. Ainsi, par exemple on pourra prévoir un amplificateur additionnel avant injection dans le port d'entrée du duplexeur, de manière à compenser l'atténuation subie par le signal dans les filtres passe-bande 560 et 580.

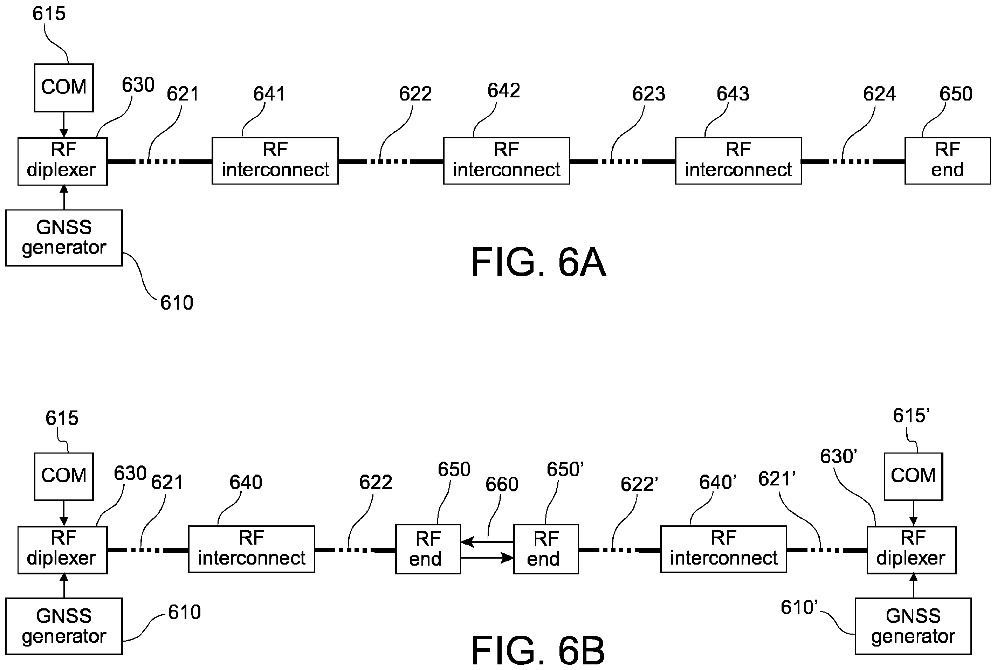

La Fig. 6A représente de manière schématique un système de positionnement utilisant 4 segments de câble rayonnant selon un premier exemple de réalisation de l'invention.

Cet exemple de réalisation est une extension à 4 segments du mode de réalisation de la Fig. 4, les éléments 610, 615, 630 ayant respectivement les mêmes fonctions que les éléments 410, 415, 430. Les boitiers d'interconnexion RF 641, 642, 643 ont également la même fonction que le boitier d'interconnexion RF 440 dont la structure est représentée en Fig. 5A. Enfin, le boitier de terminaison RF 650 a la même fonction que le boitier de terminaison RF 450 dont la structure a été représentée en Fig. 5C.

A la différence du mode de réalisation de la Fig. 4, le générateur de signaux GNSS fournit ici 8 signaux $s_1$, $s_2$, ..., $s_7$, $s_8$.

Dans ce mode de réalisation, les signaux $s_1$, $s_2$ sont émis à la fréquence $f_{GNSS}$ par le premier segment (respectivement dans le sens de propagation retour et aller), et, si l'on adopte la variante précitée, les signaux $s_3$, $s_4$ sont émis à cette même fréquence par le second segment (respectivement dans le sens de propagation retour et aller),..., et enfin les signaux $s_7$, $s_8$ sont émis à la fréquence $f_{GNSS}$ par le dernier segment (respectivement dans le sens de propagation retour et aller).

La Fig. 6B représente de manière schématique un système de positionnement utilisant 4 segments de câble rayonnant selon un deuxième exemple de réalisation de l'invention.

Cet exemple de réalisation se distingue du premier en ce qu'il comprend deux systèmes de positionnement à 2 segments, du type illustré en Fig. 4, montés tête-bêche. Le premier système de positionnement est constitué des éléments désignés par 610-650 et le second est constitué des éléments désignés par 610'-650'. Les éléments 610 à 650, d'une part, et 610' à 650', d'autre part, sont identiques aux éléments 410 à 450 de la Fig. 4.

Ainsi, le générateur GNSS 610', comme le générateur 610, génère 4 signaux GNSS $s_1'$, $s_2'$, $s_3'$, $s_4'$, les signaux $s_1'$, $s_2'$ étant émis à la fréquence $f_{GNSS}$ par le premier segment 621' (respectivement dans le sens de propagation retour et aller) et les signaux $s_3'$, $s_4'$ étant émis à cette même fréquence par le second segment (respectivement dans le sens aller et retour ; et inversement dans le cas de la variante précitée). Les signaux de communication 660 peuvent être transmis entre les boitiers de terminaison RF 650 et 650', de manière à assurer leur disponibilité le long des 4 segments.

La Fig. 6C représente de manière schématique un système de positionnement utilisant 4 segments de câble rayonnant selon un troisième exemple de réalisation de l'invention.

Les éléments 610, 615, 630 sont identiques à ceux portant les mêmes références dans la Fig. 6A.

Le troisième exemple de réalisation diffère du premier au sens où sa configuration n'est plus linéaire mais arborescente. Elle utilise un boitier RF d'interconnexion multiple aux 4 segments de câble rayonnant. D'autres configurations, notamment des configurations mixtes de type linéaire/arborescente pourront être envisagées par l'homme du métier sans sortir du cadre de la présente invention.

Dans le cas illustré, chacune des feuilles de l'arborescence est équipée d'un boitier de terminaison RF, à savoir les boitiers 651, 652, 653.

La Fig. 7 représente de manière schématique le boitier RF d'interconnexion multiple de la Fig. 6C.

Ce boitier d'interconnexion comporte, comme celui représenté en Fig. 5A, un duplexeur 710, un premier filtre passe-bande, 720-1, un premier amplificateur 730-1, ainsi qu'un premier démultiplexeur 745-1, ayant respectivement les mêmes fonctions que le duplexeur 510, le filtre passe-bande 520, l'amplificateur 530 et le démultiplexeur 545 de la Fig. 5A.

Toutefois, à la différence du boitier d'interconnexion de la Fig. 5A, le boitier d'interconnexion multiple comprend un second démultiplexeur 745-2 et un troisième multiplexeur 745-3 en série.

Le premier démultiplexeur 745-1 translate le spectre du signal GNSS composite de manière à centrer le signal $s_3$ sur la fréquence de réception $f_{GNSS}$, et fournit respectivement sur sa première sortie le signal $s_1$, réinjecté dans le segment 621, et sur sa seconde sortie un second signal composite formé des signaux $s_3$ - $s_8$, ce second signal composite étant injecté dans le segment 623.

Le second démultiplexeur 745-2 translate le spectre de manière à centrer le signal $s_5$ sur $f_{GNSS}$ et à fournir en sortie un troisième signal composite formé des signaux $s_5$ - $s_8$, ce troisième signal composite étant injecté dans le segment 624.

Enfin, le troisième démultiplexeur 745-3 translate le spectre de manière à centrer le signal $s_7$ sur $f_{GNSS}$ et à fournir en sortie un quatrième signal composite formé des signaux $s_7$ - $s_8$, ce quatrième signal composite étant injecté dans le segment 622.

On comprendra qu'à la différence du démultiplexeur 545, les démultiplexeurs 745-2 et 745-3 ne comprennent qu'une sortie, correspondant à celle de la première branche du démultiplexeur 545.

De manière générale, les démultiplexeurs assurent les changements de fréquence des signaux GNSS au sein des signaux composites, typiquement au moyen d'un décalage en fréquence. Les signaux GNSS étant régulièrement espacés d'un écart $\delta f$ dans le spectre du signal GNSS composite, et la fréquence intermédiaire étant avantageusement choisie égale à un multiple de cet écart, les différentes fréquences de translation $f_1 ... f_N$ ainsi que les différentes fréquences de référence $f_1^{ref} \cdots f_N^{ref}$ pourront être générées à partir d'un signal horloge à la fréquence $\delta f$. En d'autres termes ce signal d'horloge peut servir de signal de base à partir duquel les fréquences de translation et de référence sont générées de manière programmable.

Une première approche pourrait consister à transmettre le signal d'horloge avec les signaux GNSS d'un segment à l'autre. Toutefois, si cette fréquence est rayonnée par les segments de câble, une autorisation d'émettre à cette fréquence et une certification radio peuvent être nécessaires. Cette fréquence peut en outre être interdite car déjà utilisée à d'autres fins par d'autres équipements de l'utilisateur et pouvant donc perturber le fonctionnement de celui-ci par interférence. Enfin, les signaux se propageant dans les sens aller et retour, destinés au récepteur GNSS doivent être parfaitement à la même fréquence $f_{GNSS}$.

Selon un mode avantageux de réalisation de l'invention, le signal d'horloge est généré dans chaque boitier d'interconnexion par mélange d'au moins deux signaux dits de synchronisation. Ces signaux de synchronisation sont obtenus en modulant deux ondes continues, séparées d'un écart $\delta f$, par une séquence d'étalement de fréquence commune de fréquence faible par rapport à celle des codes C/A, autrement dit celle des séquences pseudo-aléatoires (PRN) utilisées dans les signaux GNSS.

La Fig. 8 représente de manière schématique le spectre d'un signal GNSS composite injecté dans un câble rayonnant, ce signal comprenant à la fois les signaux GNSS (ici deux signaux GPS) et des signaux de synchronisation.

Les signaux GNSS ont été représentés en 810 et 820 et les signaux de synchronisation ont été représentés en 830 et 840. L'écart de fréquence entre les signaux GNSS est égal à celui entre les signaux de synchronisation (ici $\delta f$ = 10MHz). On note que l'étalement spectral des signaux de synchronisation est bien moindre que celui des signaux GNSS. L'utilisation de signaux de synchronisation étalés spectralement permet de réduire le niveau d'interférence dans l'environnement. Les signaux synchronisation peuvent être placés arbitrairement dans des zones non occupées du spectre. Avantageusement, les signaux de synchronisation pourront être situés loin de la fréquence centrale $f_{GNSS}$, dans des trous de la densité spectrale du signal GNSS (zéros du sinus cardinal). Cette précaution permet d'améliorer le rapport signal à bruit, à la fois des signaux GNSS et du signal d'horloge.

Le signal d'horloge Clk peut être obtenu en multipliant entre eux les signaux de synchronisation, par exemple les signaux de synchronisation 830 et 840, comme expliqué ci-après.

La Fig. 9 représente de manière schématique un circuit de génération d'un signal d'horloge à partir du signal composite représenté en Fig. 8.

Le circuit de génération reçoit le signal composite précité, comprenant les signaux GNSS et les signaux de synchronisation. Ce signal composite est filtré par un premier filtre passe-bande 910 (isolant la bande des signaux GNSS, par exemple un filtre centré sur la fréquence L1 dans le cas d'un système GPS) de manière à améliorer le rapport signal à bruit dans la chaine de traitement.

Le signal composite ainsi filtré est ensuite amplifié dans un amplificateur à contrôle automatique de gain (AGC), 920, divisé en 2 par un diviseur de puissance, 930, puis multiplié avec lui-même dans un mélangeur 940 (ou un composant à caractéristique non linéaire). Etant donné que les signaux de synchronisation sont modulés au moyen d'une même séquence pseudo-aléatoire, le produit de deux tels signaux centrés sur deux fréquences $f_{sync}^1$ et $f_{sync}^2 = f_{sync}^1 + \delta f$ donne, d'une part, une onde continue à la fréquence (de battement) $\delta f$ et, d'autre part, une onde continue à la fréquence $2f_{sync}^1 + \delta f$, cette dernière étant éliminée ici par un second filtre passe-bande, 950, centré sur $\delta f$. En effet, la multiplication d'une séquence pseudo-aléatoire (exprimée sous forme BPSK) avec elle-même donne une valeur constante. Le signal en sortie du second filtre passe-bande est ensuite amplifié dans l'amplificateur 960 puis, le cas échéant, injecté dans une boucle à verrouillage de phase 970 pour réduire la gigue. Le signal en sortie du circuit de génération d'horloge est une onde continue stable à la fréquence $\delta f$ qui peut être utilisée comme signal de base pour générer les fréquences fournies aux différents mélangeurs comme décrit précédemment.

## Revendications

1.  Système de positionnement le long d'un câble rayonnant, composé d'au moins un premier segment (421) et un second segment (422), ledit système comprenant :

    - des moyens de génération (410) d'un premier signal GNSS composite formé d'une pluralité de signaux GNSS définis comme ceux qui seraient reçus en configuration de ciel ouvert par des points situés aux extrémités des différents segments du câble, à chaque segment étant associé un premier signal GNSS qui serait reçu d'un premier point à une extrémité proximale de ce segment en provenance de satellites appartenant à un premier cône de visibilité, et un second signal GNSS qui serait reçu d'un second point à une extrémité distale de ce segment en provenance de satellites appartenant à un second cône de visibilité, lesdits signaux GNSS étant multiplexés en fréquence pour former ledit signal GNSS composite, ledit signal GNSS composite étant injecté à l'extrémité proximale du premier segment, le premier signal GNSS associé au premier segment étant à la fréquence de réception d'un récepteur GNSS, $f_{GNSS}$ ;
    - un boitier d'interconnexion RF (440) connecté entre les premier et second segments, destiné à démultiplexer le premier signal GNSS composite en décalant en fréquence les différents signaux GNSS du premier signal composite et à fournir, d'une part, sur une première sortie le second signal GNSS associé au premier segment à la fréquence $f_{GNSS}$, et à fournir d'autre part, sur une seconde sortie, un second signal GNSS composite dans lequel les premier et second signaux GNSS associés au premier segment sont éliminés, le second signal GNSS du premier segment étant injecté à la fréquence $f_{GNSS}$ à l'extrémité distale du premier segment et ledit second signal GNSS composite étant injecté à l'extrémité proximale du second segment;
    - un boitier de terminaison RF (450) connecté à l'extrémité distale du second segment et destiné à décaler à la fréquence $f_{GNSS}$ le second signal GNSS associé au second segment, et à l'injecter à l'extrémité distale du second segment.

2.  Système de positionnement le long d'un câble rayonnant selon la revendication 1, **caractérisé en ce que**, les signaux GNSS du premier signal GNSS composite sont situés à des fréquences $f_{GNSS} + i\delta f$ où $i$ est un entier relatif.

3.  Système de positionnement le long d'un câble rayonnant selon la revendication 2, **caractérisé en ce que** le boitier d'interconnexion RF comprend un premier démultiplexeur (545) incluant un diviseur RF (540) pour diviser le premier signal composite entre une première voie et une seconde voie, la première voie comprenant : un premier mélangeur (551) pour mélanger le signal composite ainsi divisé avec une première fréquence de translation ($f_1$) de manière à ce que le second signal GNSS du premier segment soit translaté à une fréquence intermédiaire ($IF_0$); un premier filtre passe-bande (561) possédant une première bande passante ($BP_1$) autour de ladite fréquence intermédiaire pour sélectionner le second signal GNSS du premier segment ainsi translaté ; et un second mélangeur (571) pour mélanger le second signal GNSS du premier segment ainsi sélectionné avec une première fréquence de référence ($f_1^{ref}$) de manière à transposer ce dernier à la fréquence $f_{GNSS}$.

4.  Système de positionnement le long d'un câble rayonnant selon la revendication 3, **caractérisé en ce que** la seconde voie comprend un troisième mélangeur (552) pour mélanger le signal composite divisé avec une seconde fréquence de translation ($f_2$) de manière à ce qu'un second signal GNSS composite soit translaté à la fréquence intermédiaire ($IF_0$); un second filtre passe-bande (562) possédant une seconde bande passante ($BP_2$) autour de ladite fréquence intermédiaire pour sélectionner le second signal GNSS composite; et un quatrième mélangeur (572) pour mélanger le second signal GNSS composite avec une seconde fréquence de référence ($f_2^{ref}$) de manière à transposer ce dernier à la fréquence $f_{GNSS}$.

5.  Système de positionnement le long d'un câble rayonnant selon la revendication 3 ou 4, **caractérisé en ce que** la première voie comprend en outre un troisième filtre passe-bande (581) destiné à filtrer le second signal GNSS du premier segment et que la seconde voie comprend également un quatrième filtre passe-bande (582) destiné à filtrer le second signal GNSS composite.

6. Système de positionnement le long d'un câble rayonnant selon l'une quelconque des revendications 3 à 5, **caractérisé en ce que** le boitier d'interconnexion RF comprend en outre un duplexeur (510) dont le port commun (500) est connecté à l'extrémité distale du premier segment, le port de sortie est relié à l'entrée du diviseur RF (540) et le port d'entrée est connecté à la sortie du second mélangeur (571) de la première voie.

7. Système de positionnement le long d'un câble rayonnant selon la revendication 6, **caractérisé en ce que** le boitier d'interconnexion RF comprend en outre, entre le port de sortie du duplexeur et l'entrée du diviseur RF, un filtre passe-bande commun (520) ayant la largeur de bande du premier signal composite en série avec un amplificateur (530), le gain de l'amplificateur étant choisi pour compenser l'atténuation du signal GNSS composite dans le premier segment.

8. Système de positionnement le long d'un câble rayonnant selon la revendication 2, ledit câble rayonnant étant composé d'une pluralité N de segments, **caractérisé en ce que** le boitier de terminaison RF comprend : un premier mélangeur (550) à une Nième fréquence de translation ($f_N$) de manière à ce que le second signal GNSS du Nième segment soit translaté à une fréquence intermédiaire ($IF_0$), un premier filtre passe-bande (560) possédant une première bande passante ($BP_1$) autour de ladite fréquence intermédiaire pour sélectionner le second signal GNSS du Nième segment ainsi translaté, et un second mélangeur (570) pour mélanger le second signal GNSS du Nième segment ainsi sélectionné avec une Nième fréquence de référence ($f_N^{ref}$) de manière à transposer ce dernier à la fréquence $f_{GNSS}$.

9. Système de positionnement le long d'un câble rayonnant selon la revendication 8, **caractérisé en ce que** le boitier de terminaison RF comprend en outre un duplexeur (510) dont le port commun (500) est connecté à l'extrémité distale du Nième segment, le port de sortie est relié à l'entrée du premier mélangeur (550) et le port d'entrée est relié à la sortie du second mélangeur (570).

10. Système de positionnement le long d'un câble rayonnant selon la revendication 9, **caractérisé en ce que** le boitier de terminaison RF comprend en outre, entre le port de sortie du duplexeur et l'entrée du diviseur RF, un second filtre passe bande (520), ayant la largeur de bande du dernier signal composite associé au Nième segment, dit dernier segment, suivi par un amplificateur (530), le gain de l'amplificateur étant choisi pour compenser l'atténuation du dernier signal GNSS composite dans le dernier segment.

11. Système de positionnement le long d'un câble rayonnant selon la revendication 2, **caractérisé en ce que** les moyens de génération du signal GNSS composite génèrent également dans ce signal au moins deux signaux de synchronisation présentant un écart de fréquence de $\delta f$, chaque signal de synchronisation étant obtenu en modulant une onde continue avec une séquence d'étalement spectral pseudo-aléatoire, ladite séquence aléatoire étant choisie identique pour l'ensemble des signaux de synchronisation.

12. Système de positionnement le long d'un câble rayonnant selon la revendication 11, **caractérisé en ce que** les fréquences centrales des signaux de synchronisation sont situées dans des zones de fiable densité spectrale du premier signal GNSS composite.

13. Système de positionnement le long d'un câble rayonnant selon la revendication 11 ou 12, **caractérisé en ce que** le boitier d'interconnexion RF ainsi que le boitier de terminaison RF comprennent chacun un circuit de génération de signal d'horloge comprenant un mélangeur (940) pour multiplier le signal composite avec lui-même, un filtre passe-bas ou passe-bande (950) de manière à isoler du mélange une composante à la fréquence $\delta f$.

**Patentansprüche**

1. Positionierungssystem entlang eines Strahlungskabels, bestehend aus mindestens einem ersten Segment (421) und einem zweiten Segment (422), wobei das System Folgendes umfasst:

   - Mittel (410) zum Erzeugen eines ersten zusammengesetzten GNSS-Signals, das aus einer Vielzahl von GNSS-Signalen gebildet ist, die so definiert sind, dass sie in einer Konfiguration unter freiem Himmel von Punkten empfangen werden, die sich an den Enden der verschiedenen Segmente des Kabels befinden, wobei jedem Segment ein erstes GNSS-Signal, das von einem ersten Punkt an einem proximalen Ende dieses Segments von Satelliten empfangen wird, die zu einem ersten Sichtkegel gehören, und ein zweites GNSS-Signal zugeordnet ist, das von einem zweiten Punkt an einem distalen Ende dieses Segments von Satelliten empfangen würde, die zu einem zweiten Sichtkegel gehören, wobei die GNSS-Signale frequenzmultiplexiert sind, um das zusammengesetzte GNSS-Signal zu bilden, wobei das zusammengesetzte GNSS-Signal an dem proximalen Ende des ersten Segments eingespeist wird, wobei das erste GNSS-Signal, das dem ersten Segment zugeordnet ist, der Empfangsfrequenz eines GNSS-Empfängers, $f_{GNSS}$, entspricht;

- ein zwischen dem ersten und dem zweiten Segment verbundenes RF-Verbindungsgehäuse (440), das dazu bestimmt ist, das erste zusammengesetzte GNSS-Signal durch Frequenzverschiebung der verschiedenen GNSS-Signale des ersten zusammengesetzten Signals zu demultiplexieren und zum einen an einem ersten Ausgang das zweite GNSS-Signal bereitzustellen, das dem ersten Segment mit der Frequenz $f_{GNSS}$ zugeordnet ist, und zum anderen an einem zweiten Ausgang ein zweites zusammengesetztes GNSS-Signal bereitzustellen, in dem die ersten und zweiten GNSS-Signale, die dem ersten Segment zugeordnet sind, entfernt werden, wobei das zweite GNSS-Signal des ersten Segments mit der Frequenz $f_{GNSS}$ an dem distalen Ende des ersten Segments eingespeist wird und das zweite zusammengesetzte GNSS-Signal an dem proximalen Ende des zweiten Segments eingespeist wird;

- ein RF-Abschlussgehäuse (450), das mit dem distalen Ende des zweiten Segments verbunden ist und dazu bestimmt ist, das zweite GNSS-Signal, das dem zweiten Segment zugeordnet ist, auf die Frequenz $f_{GNSS}$ zu verschieben und es an dem distalen Ende des zweiten Segments einzuspeisen.

2. Positionierungssystem entlang eines Strahlungskabels nach Anspruch 1, **dadurch gekennzeichnet, dass** die GNSS-Signale des ersten zusammengesetzten GNSS-Signals bei Frequenzen $f_{GNSS} + i\delta f$ liegen, wobei $i$ eine relative Ganzzahl ist.

3. Positionierungssystem entlang eines Strahlungskabels nach Anspruch 2, **dadurch gekennzeichnet, dass** das RF-Verbindungsgehäuse einen ersten Demultiplexer (545) umfasst, der einen RF-Splitter (540) einschließt, um das erste zusammengesetzte Signal zwischen einem ersten Kanal und einem zweiten Kanal zu teilen, wobei der erste Kanal Folgendes umfasst: einen ersten Mischer (551) zum Mischen des so geteilten zusammengesetzten Signals mit einer ersten Translationsfrequenz ($f_1$), so dass das zweite GNSS-Signal des ersten Segments auf eine Zwischenfrequenz ($IF_0$) übersetzt wird; einen ersten Bandpassfilter (561), der eine erste Bandbreite ($BP_1$) um die Zwischenfrequenz besitzt, um das zweite GNSS-Signal des so übersetzten ersten Segments auszuwählen; und einen zweiten Mischer (571) zum Mischen des zweiten GNSS-Signals des so ausgewählten ersten Segments mit einer ersten Referenzfrequenz, ($f_1^{ref}$) um diese in die Frequenz $f_{GNSS}$ umzuwandeln.

4. Positionierungssystem entlang eines Strahlungskabels nach Anspruch 3, **dadurch gekennzeichnet, dass** der zweite Kanal einen dritten Mischer (552) umfasst, um das zusammengesetzte Signal mit einer zweiten Translationsfrequenz ($f_2$) zu mischen, sodass ein zweites zusammengesetztes GNSS-Signal auf die Zwischenfrequenz ($IF_0$) übersetzt wird; einen zweiten Bandpassfilter (562), der eine zweite Bandbreite ($BP_2$) um die Zwischenfrequenz aufweist, um das zweite zusammengesetzte GNSS-Signal auszuwählen; und einen vierten Mischer (572), um das zweite zusammengesetzte GNSS-Signal mit einer zweiten Referenzfrequenz zu mischen, ($f_2^{ref}$) um diese in die GNSS-Frequenz $f_{GNSS}$ umzuwandeln.

5. Positionierungssystem entlang eines Strahlungskabels nach Anspruch 3 oder 4, **dadurch gekennzeichnet, dass** der erste Kanal ferner einen dritten Bandpassfilter (581) umfasst, der zum Filtern des zweiten GNSS-Signals des ersten Segments bestimmt ist, und dass der zweite Kanal auch einen vierten Bandpassfilter (582) umfasst, der zum Filtern des zweiten zusammengesetzten GNSS-Signals bestimmt ist.

6. Positionierungssystem entlang eines Strahlungskabels nach einem der Ansprüche 3 bis 5, **dadurch gekennzeichnet, dass** das RF-Verbindungsgehäuse ferner einen Duplexer (510) umfasst, dessen gemeinsamer Anschluss (500) mit dem distalen Ende des ersten Segments verbunden ist, der Ausgangsanschluss mit dem Eingang des RF-Splitters (540) verbunden ist und der Eingangsanschluss mit dem Ausgang des zweiten Mischers (571) des ersten Kanals verbunden ist.

7. Positionierungssystem entlang eines Strahlungskabels nach Anspruch 6, **dadurch gekennzeichnet, dass** das RF-Verbindungsgehäuse ferner zwischen dem Ausgangsanschluss des Duplexers und dem Eingang des RF-Splitters einen gemeinsamen Bandpassfilter (520) umfasst, der die Bandbreite des ersten zusammengesetzten Signals in Serie mit einem Verstärker (530) aufweist, wobei die Verstärkung des Verstärkers ausgewählt ist, um die Dämpfung des zusammengesetzten GNSS-Signals in dem ersten Segment zu kompensieren.

8. Positionierungssystem entlang eines Strahlungskabels nach Anspruch 2, wobei das Strahlungskabel aus einer Vielzahl von N Segmenten besteht, **dadurch gekennzeichnet, dass** das RF-Abschlussgehäuse Folgendes umfasst: einen ersten Mischer (550) mit einer N-ten Translationsfrequenz ($f_N$), so dass das zweite GNSS-Signal des N-ten Segments auf eine Zwischenfrequenz ($IF_0$) übersetzt wird, einen ersten Bandpassfilter (560) mit einer ersten Bandbreite ($BP_1$) um die Zwischenfrequenz, um das zweite GNSS-Signal des so übersetzten N-ten Segments auszuwählen, und einen zweiten Mischer (570), um das zweite GNSS-Signal des so ausgewählten N-ten Segments mit einer N-ten Referenzfrequenz zu mischen, ( $f_N^{ref}$ )um diese auf die Frequenz $f_{GNSS}$ umzuwandeln.

9. Positionierungssystem entlang eines Strahlungskabels nach Anspruch 8, **dadurch gekennzeichnet, dass** das RF-Abschlussgehäuse ferner einen Duplexer (510) umfasst, dessen gemeinsamer Anschluss (500) mit dem distalen Ende des niedersten Segments verbunden ist, der Ausgangsanschluss mit dem Eingang des ersten Mischers (550) verbunden ist und der Eingangsanschluss mit dem Ausgang des zweiten Mischers (570) verbunden ist.

10. Positionierungssystem entlang eines Strahlungskabels nach Anspruch 9, **dadurch gekennzeichnet, dass** das RF-Abschlussgehäuse ferner zwischen dem Ausgangsanschluss des Duplexers und dem Eingang des RF-Splitters einen zweiten Bandpassfilter (520) umfasst, der die Bandbreite des letzten zusammengesetzten Signals aufweist, das dem niedersten Segment, dem letzten Segment, zugeordnet ist, gefolgt von einem Verstärker (530), wobei die Verstärkung des Verstärkers so gewählt wird, dass sie die Dämpfung des letzten zusammengesetzten GNSS-Signals in dem letzten Segment kompensiert.

11. Positionierungssystem entlang eines Strahlungskabels nach Anspruch 2, **dadurch gekennzeichnet, dass** die Mittel zur Erzeugung des zusammengesetzten GNSS-Signals auch in diesem Signal mindestens zwei Synchronisationssignale mit einer Frequenzabweichung von $\delta f$ erzeugen, wobei jedes Synchronisationssignal durch Modulation einer kontinuierlichen Welle mit einer Sequenz pseudozufälliger spektraler Ausbreitung erhalten wird, wobei die zufällige Sequenz für alle Synchronisationssignale identisch gewählt ist.

12. Positionierungssystem entlang eines Strahlungskabels nach Anspruch 11, **dadurch gekennzeichnet, dass** die Mittelfrequenzen der Synchronisationssignale in Bereichen geringer spektraler Dichte des ersten zusammengesetzten GNSS-Signals liegen.

13. Positionierungssystem entlang eines Strahlungskabels nach Anspruch 11 oder 12, **dadurch gekennzeichnet, dass** das RF-Verbindungsgehäuse sowie das RF-Abschlussgehäuse jeweils eine Schaltung zur Erzeugung eines Taktsignals umfassen, die einen Mischer (940) zum Multiplizieren des zusammengesetzten Signals mit sich selbst, einem Tiefpass- oder Bandpassfilter (950) umfasst, um eine Komponente mit der Frequenz $\delta f$ von dem Gemisch zu isolieren.

## Claims

1. System for positioning along a leaky feeder, composed of at least a first segment (421) and a second segment (422), said system comprising:

   - means (410) for generating a first composite GNSS signal formed from a plurality of GNSS signals defined as those that would be received in an open-sky configuration by points located at the ends of the various segments of the cable, each segment being associated with a first GNSS signal that would be received from a first point at a proximal end of this segment coming from satellites belonging to a first visibility cone, and a second GNSS signal that would be received from a second point at a distal end of this segment coming from satellites belonging to a second visibility cone, said GNSS signals being frequency multiplexed to form said composite GNSS signal, said composite GNSS signal being injected at the proximal end of the first segment, the first GNSS signal associated with the first segment being at the frequency of reception of a GNSS receiver, $f_{GNSS}$;
   - an RF interconnection box (440) connected between the first and second segments, intended to demultiplex the first composite GNSS signal by frequency offsetting the various GNSS signals of the first composite signal and to provide, on the one hand, on a first output the second GNSS signal associated with the first segment at the frequency $f_{GNSS}$, and to provide on the other hand, on a second output, a second composite GNSS signal in which the first and second GNSS signals associated with the first segment are eliminated, the second GNSS signal of the first segment being injected at the frequency $f_{GNSS}$ at the distal end of the first segment and said second composite GNSS signal being injected at the proximal end of the second segment;

- an RF termination box (450) connected to the distal end of the second segment and intended to offset to the frequency $f_{GNSS}$ the second GNSS signal associated with the second segment, and to inject it at the distal end of the second segment.

2. System for positioning along a leaky feeder according to claim 1, **characterised in that** the GNSS signals of the first composite GNSS signal are located at frequencies $f_{GNSS} + i\delta f$ where $i$ is a relative integer.

3. System for positioning along a leaky feeder according to claim 2, **characterised in that** the RF interconnection box comprises a first demultiplexer (545) including an RF divider (540) to divide the first composite signal between a first path and a second path, the first path comprising: a first mixer (551) to mix the composite signal thus divided with a first translation frequency ($f_1$) in such a way that the second GNSS signal of the first segment is translated to an intermediate frequency ($IF_0$); a first band-pass filter (561) having a first passband ($BP_1$) around said intermediate frequency to select the second GNSS signal of the first segment thus translated; and a second mixer (571) to mix the second GNSS signal of the first segment thus selected with a first reference frequency ($f_1^{ref}$) so as to transpose said signal to the frequency $f_{GNSS}$.

4. System for positioning along a leaky feeder according to claim 3, **characterised in that** the second path comprises a third mixer (552) to mix the divided composite signal with a second translation frequency ($f_2$) in such a way that a second composite GNSS signal is translated to the intermediate frequency ($IF_0$); a second band-pass filter (562) having a second passband ($BP_2$) around said intermediate frequency to select the second composite GNSS signal; and a fourth mixer (572) to mix the second composite GNSS signal with a second reference frequency ($f_2^{ref}$) so as to transpose said signal to the frequency $f_{GNSS}$.

5. System for positioning along a leaky feeder according to claim 3 or 4, **characterised in that** the first path further comprises a third band-pass filter (581) intended to filter the second GNSS signal of the first segment and that the second path also comprises a fourth band-pass filter (582) intended to filter the second composite GNSS signal.

6. System for positioning along a leaky feeder according to any one of claims 3 to 5, **characterised in that** the RF interconnection box further comprises a duplexer (510), the shared port (500) of which is connected to the distal end of the first segment, the output port of which is connected to the input of the RF divider (540) and the input port of which is connected to the output of the second mixer (571) of the first path.

7. System for positioning along a leaky feeder according to claim 6, **characterised in that** the RF interconnection box further comprises, between the output port of the duplexer and the input of the RF divider, a shared band-pass filter (520) having the bandwidth of the first composite signal in series with an amplifier (530), the gain of the amplifier being chosen to compensate for the attenuation of the composite GNSS signal in the first segment.

8. System for positioning along a leaky feeder according to claim 2, said leaky feeder being composed of a plurality of N segments, **characterised in that** the RF termination box comprises: a first mixer (550) at an Nth translation frequency ($f_{\mathbb{N}}$) so that the second GNSS signal of the Nth segment is translated to an intermediate frequency ($IF_0$), a first band-pass filter (560) having a first passband ($BP_1$) around said intermediate frequency to select the second GNSS signal of the Nth segment thus translated, and a second mixer (570) to mix the second GNSS signal of the Nth segment thus selected with an Nth reference frequency ($f_{\mathbb{N}}^{ref}$) so as to transpose said signal to the frequency $f_{GNSS}$.

9. System for positioning along a leaky feeder according to claim 8, **characterised in that** the RF termination box further comprises a duplexer (510), the shared port (500) of which is connected to the distal end of the Nth segment, the output port of which is connected to the input of the first mixer (550) and the input port of which is connected to the output of the second mixer (570).

10. System for positioning along a leaky feeder according to claim 9, **characterised in that** the RF termination box further comprises, between the output port of the duplexer and the input of the RF divider, a second band-pass filter (520), having the bandwidth of the last composite signal associated with the Nth segment, called last segment, followed by an amplifier (530), the gain of the amplifier being chosen to compensate for the attenuation of the last composite GNSS signal in the last segment.

11. System for positioning along a leaky feeder according to claim 2, **characterised in that** the means for generating the composite GNSS signal also generate in this signal at least two synchronization signals having a frequency gap of $\delta f$, each synchronization signal being obtained by modulating a continuous wave with a pseudo-random spectral spreading sequence, said random sequence being chosen identical for all of the synchronization signals.

12. System for positioning along a leaky feeder according to claim 11, **characterised in that** the central frequencies of the synchronization signals are located in zones of low spectral density of the first composite GNSS signal.

13. System for positioning along a leaky feeder according to claim 11 or 12, **characterised in that** the RF interconnection box as well as the RF termination box each comprise a circuit for generating a clock signal comprising a mixer (940) to multiply the composite signal by itself, a low-pass or band-pass filter (950) so as to isolate from the mixture a component at the frequency $\delta f$.

EP 4 508 466 B1

100

110

GPS _ sync

Nav _ data

Config _ file

131

120

132

FIG. 1

FIG. 2

EP 4 508 466 B1

att >24dB

310

320

# FIG. 3A

att <24dB

att <24dB

310

321

322

# FIG. 3B

400

E

$S_3$ $S_4$

D

$S_3$ $S_4$

450

RF
end device

F

$S_4$

422

B

$S_1$ $S_2$ $S_3$ $S_4$

440

RF
interconnecting
device

G

$S_4$

A

$S_1$ $S_2$ $S_3$ $S_4$

C

$S_1$

421

RF
diplexer

COM

415

430

GNSS
gen.

410

FIG. 4

FIG. 5A

FIG. 5B

EP 4 508 466 B1

FIG. 5C

FIG. 6A

FIG. 6B

EP 4 508 466 B1

FIG. 6C

FIG. 7

EP 4 508 466 B1

EP 4 508 466 B1

dB

S

810  830  820  840

Mhz

# FIG. 8

S → 910 → AGC 920 → 930 → 940 → 950 → 960 → 970 → *Clk*

# FIG. 9

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3074921

- CN 113534196 A